**Europäisches Patentamt**

**European Patent Office**

**Office européen des brevets**

(19)

(11) Veröffentlichungsnummer: **0 344 183**
**B1**

(12) **EUROPÄISCHE PATENTSCHRIFT**

(45) Veröffentlichungstag der Patentschrift: **27.12.90**

(21) Anmeldenummer: **88901254.8**

(22) Anmeldetag: **27.01.88**

(86) Internationale Anmeldenummer:
**PCT/EP88/00055**

(87) Internationale Veröffentlichungsnummer:
**WO 88/05875 11.08.88 Gazette 88/18**

(51) Int. Cl.⁵: **F 16 D 3/00**, F 16 D 3/80

(54) FORMSCHLÜSSIGE WELLENKUPPLUNG.

(30) Priorität: **28.01.87 PCt/ep87/00036**

(43) Veröffentlichungstag der Anmeldung:
**06.12.89 Patentblatt 89/49**

(45) Bekanntmachung des Hinweises auf die
Patenterteilung:
**27.12.90 Patentblatt 90/52**

(84) Benannte Vertragsstaaten:
**DE**

(56) Entgegenhaltungen:
**DE-A-3 327 315**
**DE-B-12 089 53**
**DE-C-3 304 888**
**FR-A-1 375 741**
**GB-A- 954 694**
**US-A-2 953 367**
**US-A-3 528 265**
**US-A-3 837 182**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **GAZYAKAN, Ünal
Peoriastrasse 32
D-7990 Friedrichshafen (DE)**
Erfinder: **RÖGNER, Horst
Happenweilerstrasse 2
D-7997 Immenstadd (DE)**

(74) Vertreter: **Raue, Reimund
Zahnradfabrik Friedrichshafen AG Löwentaler
Strasse 100 Postfach 2520
D-7990 Friedrichshafen 1 (DE)**

Courier Press, Leamington Spa, England.

**Bescreibung**

Die Erfindung betrifft eine formschlüssige Wellenkupplung nach dem Oberbegriff von Anspruch 1.

Derartige Wellenkupplungen sind z.B. durch die DE—A—22 01 425 bekannt. Sie dienen zur elastischen Stoß- und Schwindungsdämpfung und werden in der Regel bei rotierenden Wellen angewendet. Sie sind üblicherweise nicht schaltbar. Die DE—B—12 08 953 zeigt ebenfalls eine drehelastische Wellenkupplung, bei der die Mitnehmer fluidgefüllte Federn sind, deren Federkennlinien durch Veränderung des Fluiddruckes variabel sind. Bei Schwenkwellen mit einem begrenzten Schwenkbereich ist es in manchen Betriebszuständen wünschenswert, die Drehmomentübertragung auszuschalten oder stark zu vermindern. Der Erfindung liegt die Aufgabe zugrunde, eine Wellenkupplung zu schaffen, die eine schnelle Entkupplung bzw. Kupplung der beiden Schwenkwellenteile zuläßt. Diese Aufgabe wird erfindungsgemäß durch eine formschlüssige Wellenkupplung der eingangs beschriebenen Art mit dem Merkmalen des kennzeichnenden Teils von Anspruch 1 gelöst.

Entspricht der Drehwinkelbereich dem Schwenkbereich der Welle, wird kein Drehmoment von der Antriebswelle auf die Abtriebswelle der Kupplung übertragen, während im Falle, daß der Drehwinkelbereich auf Null reduziert wird, eine formschlüssige Verbindung zwischen der Antriebs- und Abtriebsseite der Wellenkupplung besteht. Der mögliche Drehwinkel wird durch das Spiel zwischen den ineinandergreifenden Kupplungsteilen sowie die Elastizität eventuell verwendeter elastischer Elemente bestimmt. Entsprechend den Federeigenschaften der elastischen Elemente verändert sich das übertragbare Moment in dem Drehwinkelbereich. Durch die Schaltmittel kann das Spiel bis auf Null verkleinert werden bzw. die elastischen Elemente auf einen beliebigen Wert vorgespannt werden. Hierzu werden zweckmäßigerweise mechanisch, pneumatisch, hydraulisch oder elektrisch betätigbare Stellglieder verwendet.

Aufgrund der kleinen Stellwege sind die Ansprechzeiten der Kupplung sehr kurz. Ein besonderer Vorteil wird dadurch erreicht, daß die zu kuppelnden Wellen mit der Verringerung des Spiels in die gleiche Winkelposition zueinander zurückgeführt werden.

Bei Schwenkwellen, die um eine Mittelstellung verschwenkbar sind, ist es zweckmäßig, den Drehwinkelbereich symmetrisch zu einer Mittelstellung veränderbar zu gestalten. Verändert sich die Drehwinkellage der zu kuppelnden Wellen zueinander im ausgekuppelten Zustand, so wird die Ausgangsstellung durch die Schaltmittel und Stellglieder beim Einkuppeln selbsttätig wieder hergestellt.

Das Spiel zwischen den ineinandergreifenden Kupplungsteilen kann gemäß einer Ausgestaltung der Erfindung dadurch veränderbar gestaltet werden, daß die Kupplungsteile axial bzw. radial zueinander verschiebbar sind und das Spiel längs des Verschiebeweges sich verändert, z.B. durch keilförmige Nuten oder konische Stifte. Die Veränderung kann linear oder nach einer gewünschten Funktion verlaufen, wobei auch Zwischenstellungen möglich sind.

Zur Veränderung des Spiels und damit des Drehwinkels sind nach einer anderen Ausgestaltung der Erfindung an den Drehmomentübertragungsflächen der ineinandergreifenden Kupplungsteile nachgiebige Wandteile, z.B. in Form von Hydraulikkolben, vorgesehen. Durch Druckbeaufschlagung dieser Kolben kann das Spiel auf Null reduziert werden. Anschläge sorgen dafür, daß die Ausgangslage der zu kuppelnden Teile sicher wieder erreicht wird.

In den Ansprüchen sind einige Varianten und Kombinationsmöglichkeiten der verschiedenen Merkmale dargelegt. Für den Fachmann ergeben sich weitere sinnvolle Kombinationsmöglichkeiten im Rahmen der Erfindung.

In der Zeichnung sind Ausführungsbeispiele der Erfindung dargestellt.

Es zeigen

Figur 1 eine erfindungsgemäße Wellenkupplung in einem teilweisen Längsschnitt mit axial zueinander verschiebbaren Mitnehmern und Aussparungen.

Figur 2 einen Teilschnitt entsprechend der Linie II/II in Figur 1.

Figur 3 einen Querschnitt durch eine erfindungsgemäße Wellenkupplung mit radial zueinander verschiebbaren Mitnehmern und Aus32 sparungen.

Figur 4 einen Teilquerschnitt durch eine erfindungsgemäße Wellenkupplung mit Hydraulikkolben.

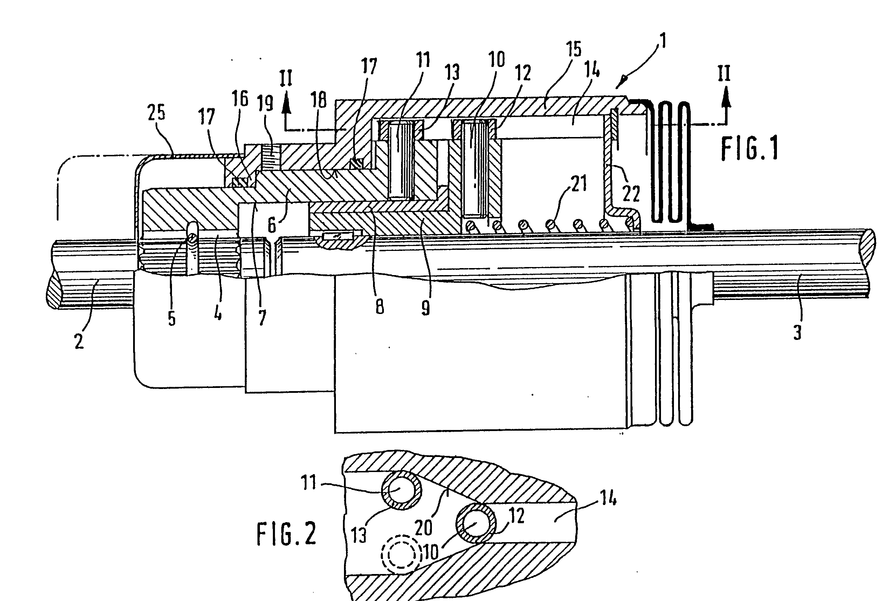

Durch eine Wellenkupplung 1 werden die zu kuppelnden Wellen 2 und 3 miteinander verbunden. Ein erstes Kupplungsteil 6 ist auf der Welle 2 über eine Mitnahmeverzahnung 4 in Verbindung mit einem Sprengring 5 axialfest und drehfest gehalten. In einer zylinderischen Ausnehmung 7 des Kupplungsteils 6 ist über eine Lagerbüchse 8 ein zweites Kupplungsteil 9 schwenkbar zum ersten Kupplungsteil 6 gelagert und mit der Welle 3 drehfest verbunden. Beide Kupplungsteile 6 und 9 weisen am Umfang verteilt Mitnehmer in Form von Mitnahmebolzen 10 und 11 auf, die Rollen 12 und 13 tragen. Diese greifen in als Führungsnuten 14 ausgebildete Aussparungen einer Kupplungsmuffe 15 ein. Die Erstreckung der Nut 14 in Umfangsrichtung ist aus Figur 2 zu entnehmen.

Die Kupplungsmuffe 15 bildet an ihrem linken Ende einen ringzylindrischen Hydraulikraum 16, der gegenüber dem ersten Kupplungsteil 6 durch Radialdichtungen 17 abgedichtet ist.

Zwischen diesen hat der erste Kupplungsteil einen radialen Vorsprung, der in dem Hydraulikraum 16 einen axial feststehenden Stufenkolben 18 bildet. Eine Anschlußbohrung für das Hydrauliköl ist mit 19 bezeichnet. Wird über diese Druckmittel in den Hydraulikraum 16 zugeführt, wird die Kupplungsmuffe 15 entgegen der Kraft einer Feder 21 nach links verschoben, wobei eine Rampe 20 den Mitnahmebolzen 11 mit der Rolle 13 in die Mittenstellung bringt und in den engen Teil der Führungsnut 14 einfädelt. In der Figur 2 ist eine andere extreme Ausgangslage des Mitnahmebolzens 11 gestrichelt gezeichnet.

Befinden sich beide Mitnahmebolzen 10 und 11 mit ihren Rollen 12 und 13 in dem engen Teil der Führungsnut 14 ist der Drehwinkelbereich zwischen den zu kuppelnden Wellen 2 und 3 praktisch gleich Null. Ein kleiner Drehwinkelbereich kann u.U. zugelassen werden, wenn die Rollen 12 und 13 zur Stoß- oder Schwingungsdämpfung aus elastischem dämpfendem Material hergestellt sind.

Wird der Hydraulikraum 16 entlastet stellt die Feder 21 die Kupplungsmuffe über einen mittels Sprengring 23 iner Kupplungsmuffe 15 gehaltenen Deckel 22 in die axiale Ausgangslage zurück. Grundsätzlich ist es auch möglich, daß eine Feder die Kupplungsmuffe in den gekuppelten Zustand hält und die Kupplung durch den Hydraulikdruck geöffnet wird. An den Enden der Kupplung sind Schutzvorrichtungen in Form eines Faltenbalges 24 und eines Abdeckmantels 25 vorgesehen.

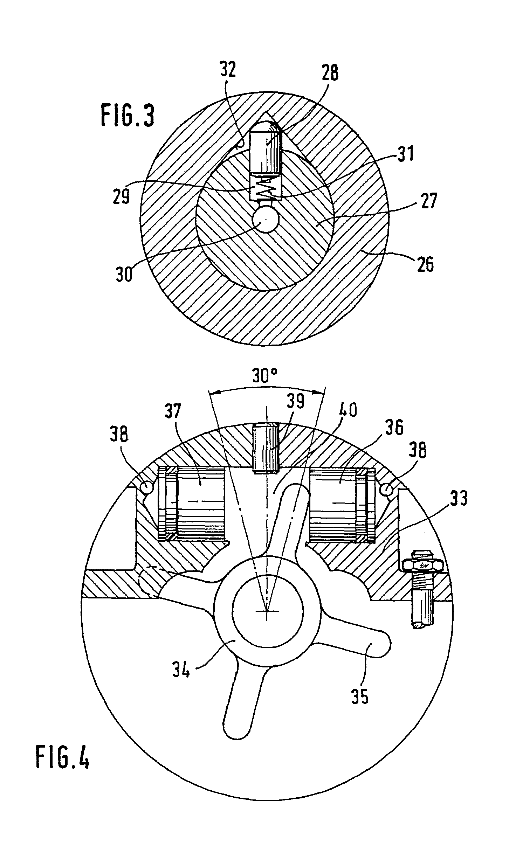

Die Ausführung nach Figur 3 zeigt einen ersten Kupplungsteil 26 und einen zweiten Kupplungsteil 27, wobei der zweite Kupplungsteil im ersten Kupplungsteilschwenkbar gelagert ist. Ein radial angeordneter Mitnehmerzapfen 28 ist radial verschieblich im Kupplungsteil 27 in einer Bohrung 29 geführt und kann über einen zentralen Druckmittelkanal 30 mit Druckluft oder Drucköl beaufschlagt werden. Um Klappern und Geräusche zu vermeiden, kann es zweckmäßig sein, den Mitnehmerzapfen 28 durch eine schwache Feder 31 in eine kegelige Vertiefung 32 zu drücken.

Bei einer Schwenkbewegung des ersten Kupplungsteils 26 gegenüber dem zweiten 27 wird der Mitnehmerzapfen 28 nach innen gedrückt, ohne daß eine nennenswerte Drehmomentübertragung stattfindet. Wird allerdings der Mitnahmezapfen 28 durch das Druckmittel nach außen gedrückt, so findet eine spielfreie Drehmomentübertragung in beiden Richtungen statt und zwar stets in der gleichen Winkelstellung der beiden Kupplungsteile zueinander. Bei Bedarf können auf den Umfang verteilt mehrere Mitnahmezapfen angeordnet werden. Diese können gleich oder verschieden ausgestaltet werden, so daß je nach hydraulischer Verriegelung des einen oder anderen Mitnahmezapfens 28 verschiedene Drehwinkelbereiche eingestellt werden können.

Die Ausführung nach Figur 4 hat ein mehrteiliges erstes Kupplungsteil 33 und ein zweites Kupplungsteil 34 mit sternförmig angeordneten Mitnehmern 35. Der Drehwinkelbereich zwischen dem ersten und dem zweiten Kupplungsteil wird begrenzt durch die Stellung von Hydraulikkolben 36 und 37, die mit ihrem Zwischenraum 40 eine Aussparung bilden und an denen die Mitnehmer 35 anliegen. Über Zuführungsbohrungen 38 und 39 können die Hydraulikkolben 36 und 37 gleichmäßig beaufschlagt und bis zu einem mittigen Anschlag 39 verschoben werden. In der Anschlagposition ist das Spiel zwischen den Kupplungsteilen 33 und 34 Null. Diese Ausführung ist für einen maximalen Drehwinkelbereich bis 30° ausgelegt. Zwischenwerte können durch Zwischenstellungen der Hydraulikkolben 36 und 37 erreicht werden.

Die gezeigten hydraulischen Stellglieder können ohne weiteres auch pneumatisch betätigt werden oder durch mechanische oder elektrische Stellglieder ersetzt werden. So ist es beispielsweise möglich, die Kupplungsmuffe 15 nach Figur 1 durch einen Elektromotor oder Elektromagneten axial zu verstellen. Bei der Ausführung nach Figur 4 können die Hydraulikkolben 36, 37 durch Elektromagneten ersetzt werden, und auch der Mitnahmezapfen 28 nach Figur 3 könnte elektromagnetisch betätigt werden. Dadurch eröffnen sich viele Möglichkeiten, durch elektronische Steuerungen mechanische Kopplungen für Schwenkverbindungen in Abhängigkeit von anderen Parametern beliebig zuzuschalten.

Bezugszeichen

| | |
|---|---|
| 1 | Wellenkupplung |
| 2 | Wellen |
| 3 | Wellen |
| 4 | Mitnahmeverzahnung |
| 5 | Sprengring |
| 6 | erstes Kupplungsteil |
| 7 | Ausnehmung |
| 8 | Lagerbrüchse |
| 9 | zweites Kupplungsteil |
| 10 | Mitnahmebolzen |
| 11 | Mitnahmebolzen |
| 12 | Rolle |
| 13 | Rolle |
| 14 | Führungsnut |
| 15 | Kupplungsmuffe |
| 16 | Hydraulikraum |
| 17 | Dichtungen |
| 18 | Stufenkolben |
| 19 | Anschlußbohrung |
| 20 | Rampe |
| 21 | Feder |
| 22 | Deckel |
| 23 | Sprengring |
| 24 | Faltenbalges |
| 25 | Abdeckmantel |
| 26 | erstes Kupplungsteil |
| 27 | zweites Kupplungsteil |
| 28 | Mitnehmerzapfen |
| 29 | Bohrung |
| 30 | Druckmittelkanal |
| 31 | Feder |
| 32 | kegelige Vertiefung |
| 33 | erstes Kupplungsteil |
| 34 | zweites Kupplungsteil |
| 35 | Mitnehmer |
| 36 | Hydraulikkolben |
| 37 | Hydraulikkolben |
| 38 | Zuführungsbohrungen |
| 39 | Anschlag |
| 40 | Zwischenraum |

## Patentansprüche

1. Formschlüssige Wellenkupplung mit zwei Kupplungshälften, von denen mindestens eine mit Mitnehmern ausgestattet ist, die in Ausssparungen der anderen Kupplungshälfte oder eines damit verbundenen Teils eingreifen, dadurch gekennzeichnet, daß die relative Lage der Mitnehmer (10, 11, 28, 35) in Bezug auf Anlageflächen der Aussparung (14, 32, 40) in zwei Schaltstellungen veränderbar ist, so daß in einer ersten Schaltstellung ein größerer Drehwinkel zwischen den zu kuppelnden Wellen (2, 3) möglich ist als in der zweiten Stellung.

2. Wellenkupplung nach Anspruch 1, dadurch gekennzeichnet, daß der Drehwinkelbereich symmetrisch zu einer Mittelstellung veränderbar ist.

3. Wellenkupplung nach Anspruch 1, dadurch gekennzeichnet, daß die Aussparungen (14, 32, 40) bzw. die Mitnehmer (10, 11, 28, 35) axial bzw. radial zueinander verschiebbar sind und in der einen Stellung ein größeres Spiel zueinander aufweisen als in der anderen Stellung.

4. Wellenkupplung nach Anspruch 1, dadurch gekennzeichnet, daß das Spiel zwischen den ineinandergreifenden Kupplungsteilen durch mechanisch, pneumatisch, hydraulisch oder elektrisch betätigbare Stellglieder veränderbar ist.

5. Wellenkupplung nach Anspruch 4, dadurch gekennzeichnet, daß verstellbare Hydraulikkolben (36, 37) in einem Kupplungsteil (33) einen Zwischenraum (40; Aussparung) bilden, in den die Mitnehmer (35) des anderen Kupplungsteiles (34) eingreifen.

6. Wellenkupplung nach Anspruch 1, dadurch gekennzeichnet, daß zwischen den Mitnehmern (10, 11, 28, 35) und den Aussparungen (14, 32, 40) elastische Elemente angeordnet sind.

## Revendications

1. Accouplement d'arbre à commande mécanique avec deux demi-accouplements dont au moins un est équipé d'entraîneurs qui s'engagent dans les évidements de l'autre demi-accouplement ou dans une partie reliée à celui-ci et qui est caractérisé de telle manière que la position relative des entraîneurs (10, 11, 28, 35) par rapport aux surfaces d'appui de l'évidement (14, 32, 40) est variable en deux positions d'enclenchement de telle manière qu'un angle de rotation plus grand est possible entre les arbres à accoupler (2, 3) en première position d'enclenchement que dans la deuxième position.

2. L'accouplement d'arbre suivant la revendication 1 est ainsi caractérisé que la plage d'angle de rotation est variable symétriquement par rapport à la position médiane.

3. L'accouplement d'arbre suivant la revendication 1 est ainsi caractérisé que les évidements (14, 32, 40) ou que les entraîneurs (10, 11, 28, 35) sont déplaçables les uns par rapport aux autres axialement ou radialement et que, dans une position, ils présentent un plus grand jeu les uns par rapport aux autres que dans l'autre position.

4. L'accouplement d'arbre suivant la revendication 1 est ainsi caractérisé que le jeu entre les pièces de l'accouplement s'engageant les unes dans les autres peut être modifié par des correcteurs à commande mécanique, pneumatique hydraulique ou électrique.

5. L'accouplement d'arbre suivant la revendication 4 est ainsi caractérisé que les pistons à commande hydraulique (36, 37) forment un espace intermédiaire (40; évidement) dans la partie de l'accouplement (33), dans lequel les entraîneurs (35) de l'autre partie de l'accouplement (34) s'engagent.

6. L'accouplement d'arbre suivant la revendication 1 est ainsi caractérisé que les éléments élastiques sont disposés entre les entraîneurs (10, 11, 28, 35) et les évidements (14, 32, 40).

## Claims

1. Form locking shaft coupling with 2 coupling halves, at least one of which being equipped with drivers engaging in recesses in the other coupling half or in a part connected thereto.

characterized in that the relative positions of the drivers (10, 11, 28, 35) have two possible settings relative to the supporting faces of the recesses (14, 32, 40), so that in the first setting a greater angle of rotation is possible between the shafts to be coupled (2, 3) than in the second.

2. Shaft coupling according to claim 1 characterized in that the angle of rotation is variable symmetrically to a central position.

3. Shaft coupling according to claim 1 characterized in that the recesses (14, 32, 40) and/or drivers (10, 11, 28, 35) are axially/radially variable relative to each other and in that in one setting there is more play between them than in the other.

4. Shaft coupling according to claim 1 characterized in that the play between the engaging coupling bodies are adjustable by means of mechanically, pneumatically, hydraulically or electrically powered controlling elements.

5. Shaft coupling according to claim 4 characterized in that the adjustable hydraulic pistons (36, 37) in a coupling element (33) form a gap (40; recess) into which the drivers (35) of the other element (34) to be coupled engage.

6. Shaft coupling according to claim 1 characterized in that elastic elements are arranged between the drivers (10, 11, 28, 35) and the recesses (14, 32, 40).

FIG.1

FIG.2

EP 0 344 183 B1

FIG.3

FIG.4

2